# EUROPEAN PATENT APPLICATION

(11) **EP 2 879 420 A1**
(43) Date of publication of application: **03.06.2015**
(21) Application number: 14185699.7
(22) Date of filing: 22.09.2014
(51) Int. Cl.: H04W 12/04, H04L 9/08, H04W 40/16, H04W 84/04

(54) **APPARATUS AND METHOD FOR TRANSMITTING SENSITIVE DATA USING RELAY**

(30) Priority: 27.11.2013 KR 20130145330
(71) Applicant: Electronics and Telecommunications Research Institute, Daejeon-city 305-350 (KR)
(72) Inventor: Baek, Seon Yeob, 305-390 Daejeon (KR); Park, Youngmi, 305-390 Daejeon (KR); Park, SangHyun, 305-390 Daejeon (KR); Park, Jongwook, 305-390 Daejeon (KR)
(74) Representative: Betten & Resch

(57) **Abstract**

An apparatus and method for transmitting sensitive data using a relay are disclosed. The apparatus for transmitting sensitive data includes a receiver, a key generation unit, and a transmitter. The receiver receives a pilot signal via an antenna, and estimates the state of a wireless channel using the received pilot signal. The key generation unit generates an encryption key stream based on information including the state of the wireless channel. The transmitter transmits plain text data using the encryption key stream, or transmits a pilot signal.

## Description

### BACKGROUND OF THE INVENTION

### 1. Technical Field

The present disclosure relates generally to an apparatus and method for transmitting sensitive data using a relay and, more particularly, to an apparatus and method for extracting an encryption key stream from the state of a wireless channel established using a trusted or untrusted relay in a wireless communication system, encrypting plain text data using the extracted encryption key stream, and then transmitting the encrypted data.

### 2. Description of the Related Art

Many encryption technologies are being applied to and used in wireless communication systems. However, such encryption technologies are problematic in that legitimate users are dependent on computation complexity, instead of a mathematical impossibility of an eavesdropper obtaining an encryption key, in order to protect an encryption key. As the available computation ability of an eavesdropper increases, the effectiveness of such methods decreases. Accordingly, constructing an encryption technology capable of providing absolute security is more advantageous than constructing an encryption technology based on the assumption of computational complexity.

In a wireless communication system, correlated random sources that provide absolute security may be obtained from information about a wireless channel. For example, as disclosed in Korean Patent Application Publication No. 10-2011-0023830 entitled "Method for Transmitting and Receiving Signals at Mobile Station Using Predetermined TDD frame Structure in Wireless Communication System", if a wireless communication system corresponds to a time division duplex (TDD) method, two users who have set up a communication link may obtain the same information about the state of a wireless channel within a specific time. In contrast, an eavesdropper who has not set up a wireless link with the two users may monitor the state of a wireless channel that rarely has a correlation with the wireless channel of the two users. Such a difference can be used to generate a perfect encryption key stream and encrypt and transmit data.

### SUMMARY OF THE INVENTION

Accordingly, the present invention has been made keeping in mind the above problems occurring in the conventional art, and objects of the present invention are as follows.

First, as the computation ability of an eavesdropper is advanced, an encryption method based on computational complexity has been limited. Accordingly, in the present invention, a conventional encryption method based on computational complexity is replaced with an encryption method using a wireless channel for providing absolute security. Accordingly, an eavesdropper can be prevented from obtaining information about the communication channel of a user, which varies continuously, and also prevented from extracting plain text data.

Second, a conventional data encryption method is performed through computation based on a mathematical encryption algorithm. In contrast, in an embodiment of the present invention, a data transmission apparatus directly extracts an encryption key stream from information about the state of a wireless channel, and encrypts plain text data in a physical layer using the extracted encryption key stream. Accordingly, the present invention does not require a separate mathematical encryption algorithm. For this reason, the capacity of memory can be reduced, and a problem, such as the divulgence of an encryption algorithm attributable to the loss of equipment, can be prevented.

Third, in a conventional encryption method, a user who has received encrypted data decodes the encrypted data through computation based on a mathematical encryption algorithm that is the same as that of an encryption process. In contrast, in an embodiment of the present invention, separate decoding computation and a separate apparatus are not required because a data reception apparatus receives naturally decoded plain text data. That is, the present invention provides a method of transmitting sensitive data, which is capable of improving the degree of security, simplifying the structure of the data reception apparatus, and reducing costs.

Fourth, although wireless transmission is performed via a relay because a wireless channel environment is not desirable, an encryption key stream may be generated based on information about the state of a wireless channel, and may be securely transmitted via a trusted relay or an untrusted relay. The data reception apparatus may decode data through computation simpler than the decoding computation of a conventional encryption algorithm.

Fifth, if a change in a wireless channel is slight, the randomness of an encryption key stream extracted from information about the state of the wireless channel is low. In order to solve this problem, in an embodiment of the present invention, the data reception apparatus artificially modulates a transmitted pilot so that an effect, identical to that obtained when a wireless channel is changed, is achieved. In this case, the reception side that receives a pilot or the transmission side that encrypts and transmits data obtains channel response information similar to that obtained when the wireless channel is changed, and extracts a random encryption key stream based on the obtained channel response information. The transmission side that transfers a pilot or the reception side that receives encrypted data decodes received encrypted data using information about the state of a wireless channel that has been artificially modulated.

Sixth, in a wireless channel between terminals that perform wireless communication, the distribution of encryption keys from a center is not required because the terminals directly extract encryption key streams. Accordingly, encryption communication can be easily utilized in ad-hoc or peer-to-peer communication that is not established in an encryption key distribution system.

In accordance with an aspect of the present invention, there is provided a method of transmitting sensitive data, including receiving, by a data transmission apparatus, a pilot signal that is transferred by a data reception apparatus and relayed by a relay; estimating the state of a wireless channel between the data transmission apparatus and the relay using the pilot signal; extracting an encryption key stream from information including the state of the wireless channel; performing an error correction encoding process on plain text data to be transmitted and performing encryption on the plain text data using the encryption key stream; and relaying and transmitting the encrypted plain text data to the data reception apparatus using the relay.

The information including the state of the wireless channel may include information about at least one of the phase shift, intensity, threshold crossing rate the polarization of the pilot signal.

The relay may correspond to a trusted relay.

The method may further include, before receiving the pilot signal transferred by the data reception apparatus and relayed by the relay, receiving, by the data transmission apparatus, a pilot signal from the relay or the data reception apparatus.

Relaying and transmitting the encrypted plain text data to the data reception apparatus may include directly transmitting, by the data transmission apparatus, the encrypted plain text data to the data reception apparatus.

In accordance with another aspect of the present invention, there is provided a method of transmitting sensitive data, including receiving, by a data transmission apparatus, a pilot signal from a relay and a data reception apparatus; receiving a pilot signal transferred by the data reception apparatus and relayed by the relay; estimating the state of a wireless channel between the data transmission apparatus and the relay or the data reception apparatus using the pilot signal; extracting an encryption key stream from information including the state of the wireless channel; performing an error correction encoding process on plain text data to be transmitted, and encrypting the pain text data using the encryption key stream; transferring the pilot signal to the data reception apparatus; and relaying and transmitting the encrypted plain text data to the data reception apparatus using the relay.

The method may further include, after relaying and transmitting the data reception apparatus, estimating, by the data reception apparatus, the state of the wireless channel between the data transmission apparatus and the relay based on the pilot signal received from the data transmission apparatus, and extracting an encryption key stream from the estimated results; restoring data using the encrypted plain text data, received from the relay, and the encryption key stream extracted from the estimated results of the state of the wireless channel between the data transmission apparatus and the relay; and restoring the plain text data by performing an error correction decoding process on the restored data.

The information including the state of the wireless channel may include information about at least one of the phase shift, intensity, threshold crossing rate and polarization of the pilot signal.

The relay may correspond to an untrusted relay.

In accordance with still another aspect of the present invention, there is provided an apparatus for transmitting sensitive data, including a receiver configured to receive a pilot signal via an antenna, and to estimate the state of a wireless channel using the received pilot signal; a key generation unit configured to generate an encryption key stream based on information including the state of the wireless channel; and a transmitter configured to transmit plain text data using the encryption key stream, or to transmit a pilot signal.

The transmitter may include a transmission control unit configured to determine whether to transmit the plain text data or the pilot signal.

The transmitter may include an error correction encoding unit configured to perform an error correction encoding process on the plain text data if the transmission control unit determines to transmit the plain text data; a transmission signal encryption unit configured to encrypt the plain text data on which the error correction encoding process has been performed using the encryption key stream; and a data signal generation unit configured to convert the encrypted plain text data into a wireless signal form, to generate a data signal, and to transmit the data signal to a data reception apparatus.

The transmitter may include a pilot signal generation unit configured to convert the pilot signal, stored in a representative pilot storage device, into a wireless signal form, and to transmit the converted signal to a data reception apparatus if the transmission control unit determines to transmit the pilot signal.

The information including the state of the wireless channel may include information about at least one of the phase shift, intensity, threshold crossing rate and polarization of the pilot signal.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a diagram illustrating a network environment to which a method of transmitting sensitive data according to an embodiment of the present invention is applied;
FIGS. 2 to 5 are diagrams illustrating a wireless transmission procedure using a trusted relay according to an embodiment of the present invention;
FIGS. 6 to 9 are diagrams illustrating a wireless transmission procedure using an untrusted relay according to an embodiment of the present invention;
FIG. 10 is a diagram schematically illustrating the configuration of a data transmission apparatus according to an embodiment of the present invention;
FIG. 11 is a diagram schematically illustrating the configuration of a data reception apparatus according to an embodiment of the present invention;
FIG. 12 a diagram schematically illustrating the configuration of a relay according to an embodiment of the present invention;
FIG. 13 is a flowchart illustrating a method of transmitting sensitive data using a trusted relay according to an embodiment of the present invention; and
FIG. 14 is a flowchart illustrating a method of transmitting sensitive data using an untrusted relay according to an embodiment of the present invention.

### DESCRIPTION OF THE PREFERRED EMBODIMENTS

Embodiments of the present invention are described in detail below with reference to the accompanying drawings. Repeated descriptions and descriptions of known functions and configurations which have been deemed to make the gist of the present invention unnecessarily obscure will be omitted below. The embodiments of the present invention are intended to fully describe the present invention to a person having ordinary knowledge in the art to which the present invention pertains. Accordingly, the shapes, sizes, etc. of components in the drawings may be exaggerated to make the description clear.

An apparatus and method for transmitting sensitive data using a relay according to embodiments of the present invention are described in detail below with reference to the accompanying drawings.

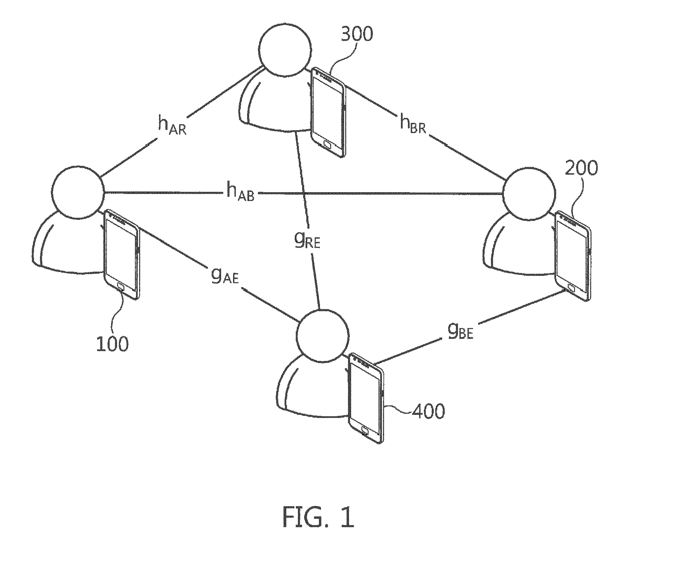

FIG. 1 is a diagram illustrating a network environment to which a method of transmitting sensitive data according to an embodiment of the present invention is applied.

Referring to FIG. 1, the network environment to which the method of transmitting sensitive data according to an embodiment of the present invention is applied may include a data transmission apparatus 100 configured to transmit sensitive data, a data reception apparatus 200 configured to receive the sensitive data, a relay 300 configured to relay the sensitive data, and an eavesdropping apparatus 400 configured to eavesdrop on the transmission of the sensitive data.

The data transmission apparatus 100 transmits encrypted data to the data reception apparatus 200 using the relay 300. In this case, the eavesdropping apparatus 400 attempts to extract transmitted plain text data by eavesdropping on the transmission of the encrypted data transmitted from the data transmission apparatus 100 to the relay 300.

The state of a wireless channel between the data transmission apparatus 100 and the relay 300 is represented by h_{AR}, the state of a wireless channel between the data reception apparatus 200 and the relay 300 is represented by h_{BR}, the state of a wireless channel between the data transmission apparatus 100 and the data reception apparatus 200 is represented by h_{AB}, the state of a wireless channel between the data transmission apparatus 100 and the eavesdropping apparatus 400 is represented by g_{AE}, and the state of a wireless channel between the data reception apparatus 200 and the eavesdropping apparatus 400 is represented by g_{BE}.

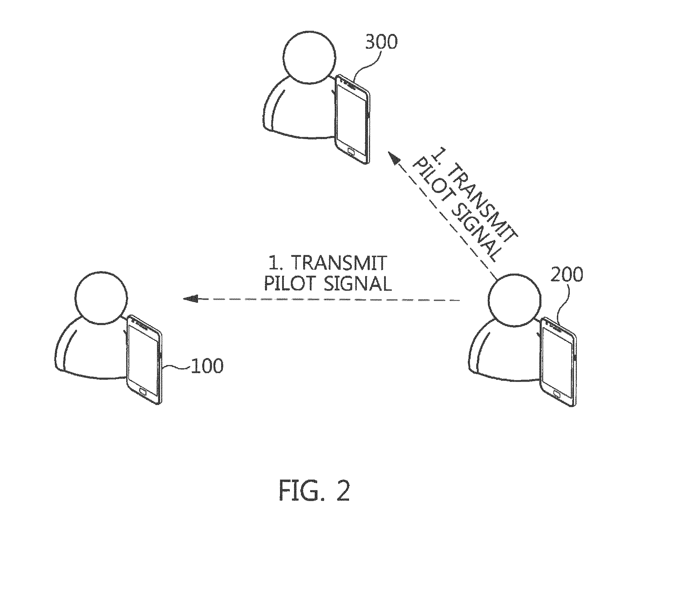

A wireless transmission procedure using a trusted relay is described in detail with reference to FIGS. 2 to 5.

FIGS. 2 to 5 are diagrams illustrating a wireless transmission procedure using a trusted relay according to an embodiment of the present invention.

In FIGS. 2 to 5, the relay 300 may correspond to a trusted relay. If the relay 300 corresponds to a trusted relay as described above, it does not matter whether or not the relay 300 detects sensitive data that is transmitted from the data transmission apparatus 100 to the data reception apparatus 200.

A procedure in which the data transmission apparatus 100 transmits sensitive data to the data reception apparatus 200 using a trusted relay (i.e., the relay 300) is described below.

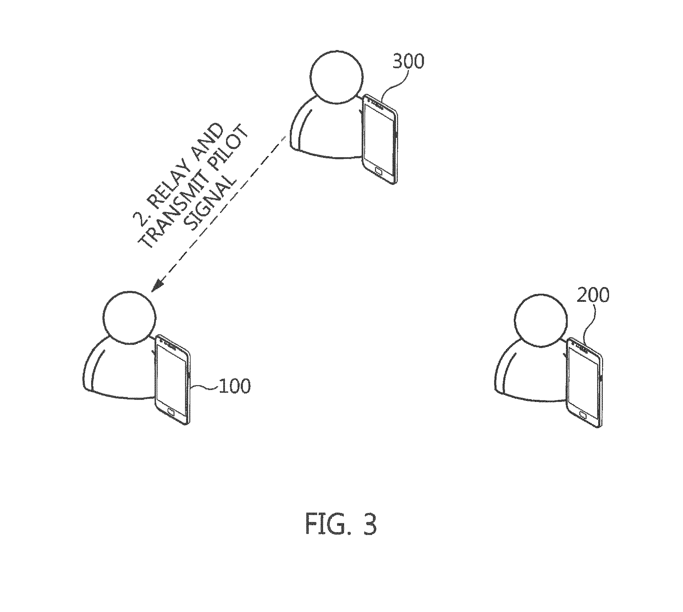

As illustrated in FIG. 2, the data reception apparatus 200 transmits a pilot signal to the data transmission apparatus 100 and the trusted relay 300 (1). Furthermore, as illustrated in FIG. 3, the trusted relay 300 relays and transmits a pilot signal, received from the data reception apparatus 200, to the data transmission apparatus 100 (2).

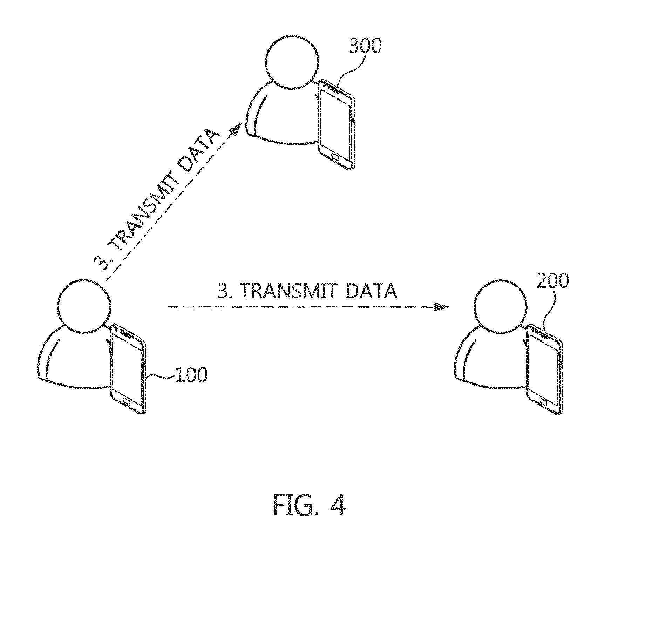

As illustrated in FIG. 4, the data transmission apparatus 100 encrypts plain text data based on information about the state of a wireless channel, and transmits data corresponding to the results of the encryption to the trusted relay 300 (3). At the same time, the data transmission apparatus 100 may transmit data to the data reception apparatus 200 (3).

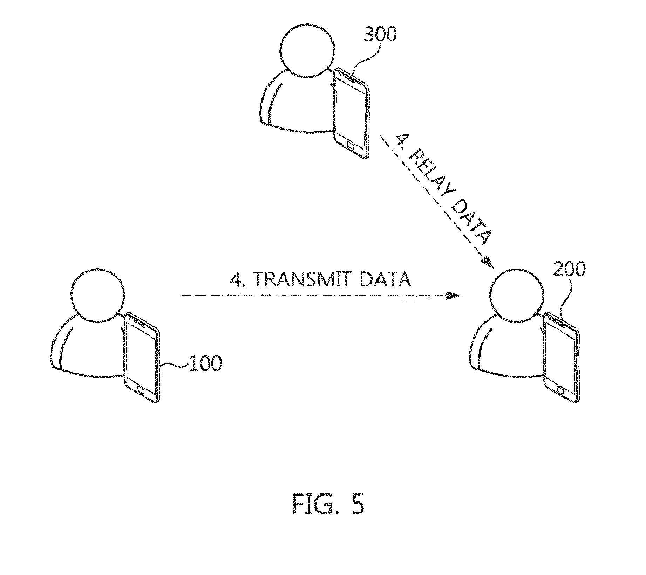

As illustrated in FIG. 5 (4), the trusted relay 300 relays and transmits the data, received from the data transmission apparatus 100, to the data reception apparatus 200. At the same time, the data transmission apparatus 100 may transmit the data to the data reception apparatus 200 (4).

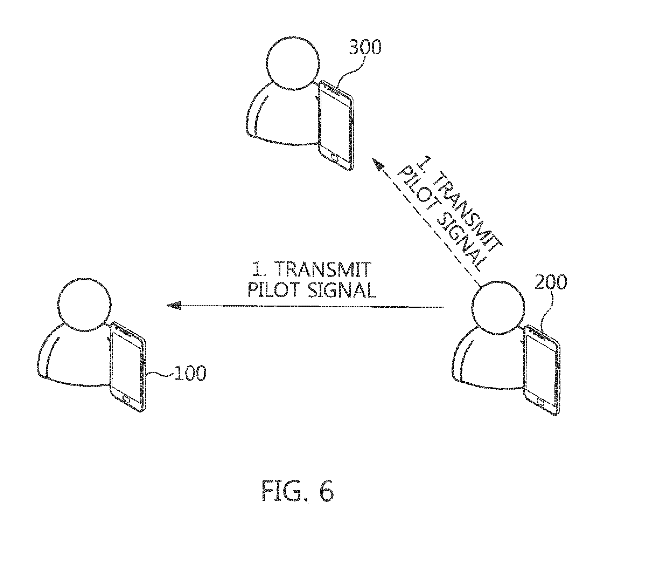

A wireless transmission procedure using an untrusted relay is described in detail with reference to FIGS. 6 to 9.

FIGS. 6 to 9 are diagrams illustrating a wireless transmission procedure using an untrusted relay according to an embodiment of the present invention.

In FIGS. 6 to 9, the relay 300 may correspond to an untrusted relay. If the relay 300 corresponds to an untrusted relay as described above, the relay 300 should not detect sensitive data that is transmitted from the data transmission apparatus 100 to the data reception apparatus 200.

A procedure in which the data transmission apparatus 100 transmits sensitive data to the data reception apparatus 200 using an untrusted relay (i.e., the relay 300) is described below.

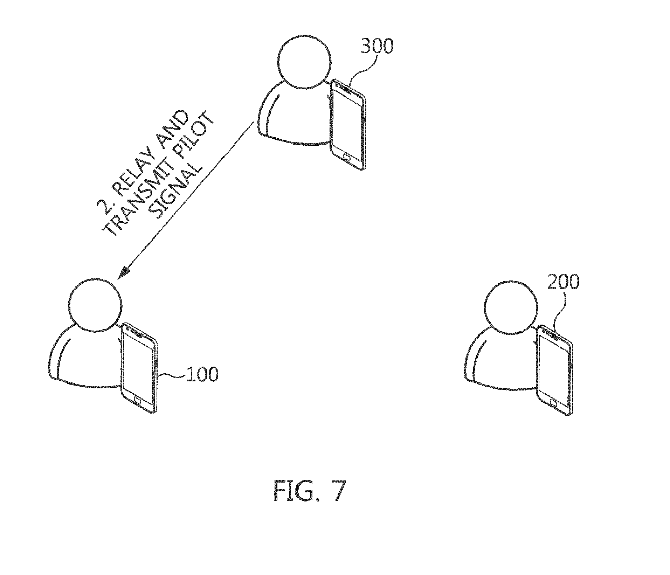

As illustrated in FIG. 6, the data reception apparatus 200 transmits a pilot signal to the data transmission apparatus 100 and the untrusted relay 300 (1). Furthermore, as illustrated in FIG. 7 (2), the untrusted relay 300 relays and transmits the pilot signal, received from the data reception apparatus 200, to the data transmission apparatus 100.

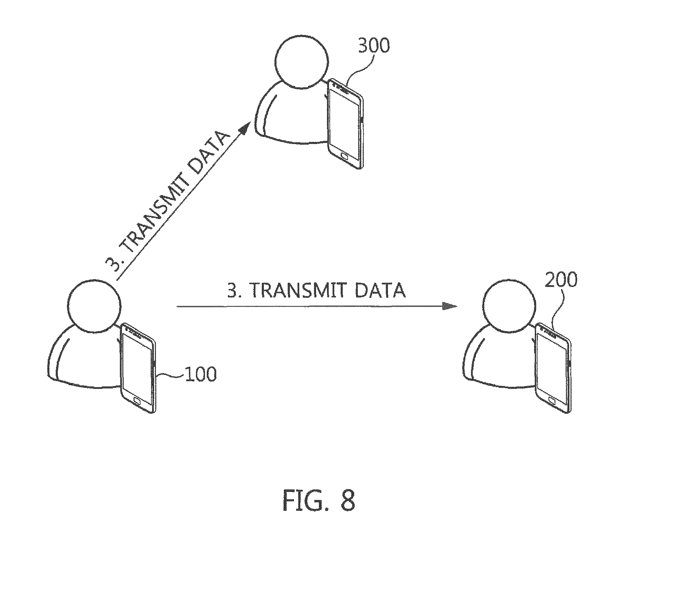

As illustrated in FIG. 8, the data transmission apparatus 100 transfers data corresponding to the results of the encryption of plain text data to the untrusted relay 300 based on information about the state of a wireless channel, and transmits its own pilot signal to the data reception apparatus 200 (3). The data reception apparatus 200 estimates information about the state of a wireless channel in connection with the data transmission apparatus 100 based on the received pilot signal.

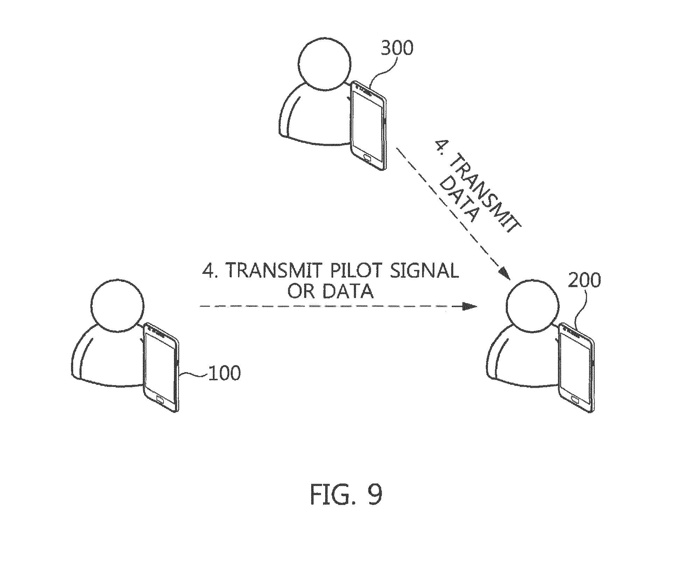

As illustrated in FIG. 9, the untrusted relay 300 relays and transmits the data, received from the data transmission apparatus 100, to the data reception apparatus 200 (4). At this time, the data transmission apparatus 100 may transmit its own pilot signal or data to the data reception apparatus 200 (4).

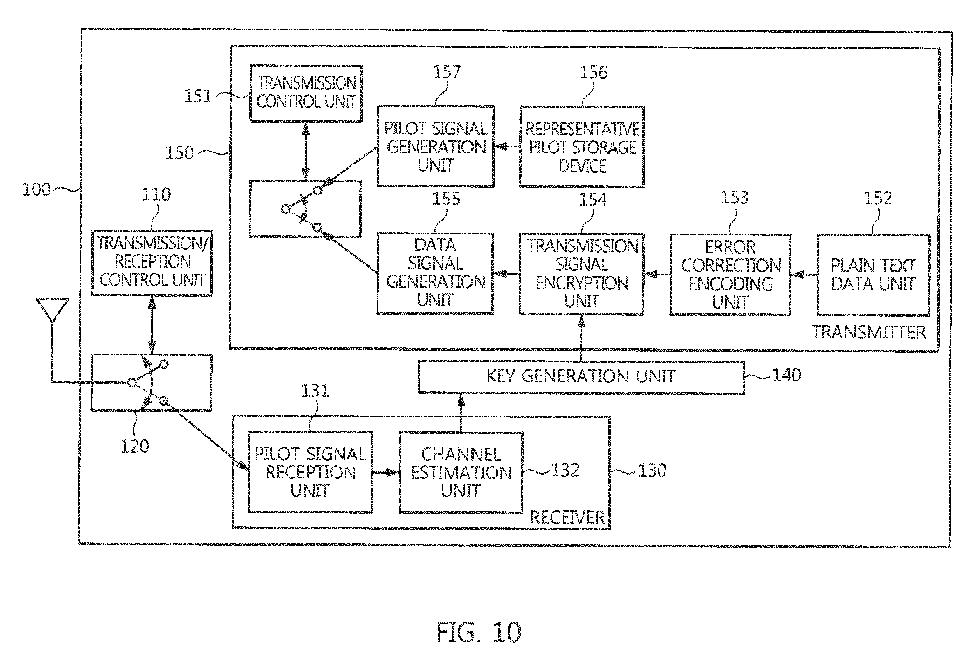

The data transmission apparatus 100 placed in the network environment, to which the method for transmitting sensitive data is applied, is described in detail below with reference to FIG. 10.

FIG. 10 is a diagram schematically illustrating the configuration of the data transmission apparatus 100 according to an embodiment of the present invention.

Referring to FIG. 10, the data transmission apparatus 100 may include a transmission/reception control unit 110, a switch 120, a receiver 130, a key generation unit 140, and a transmitter 150.

The data transmission apparatus 100 is configured so that the switch 120 selects the receiver 130 or the transmitter 150 in response to an instruction from the transmission/reception control unit 110.

The receiver 130 may include a pilot signal reception unit 131, and a channel estimation unit 132.

The pilot signal reception unit 131 receives a pilot signal via an antenna.

The channel estimation unit 132 estimates the state of each wireless channel from a pilot signal received from the pilot signal reception unit 131, and transfers information about the estimated state of each wireless channel to the key generation unit 140.

The key generation unit 140 generates an encryption key stream based on the information about the state of each wireless channel received from the channel estimation unit 132.

The transmitter 150 may include a transmission control unit 151, a plain text data unit 152, an error correction encoding unit 153, a transmission signal encryption unit 154, a data signal generation unit 155, a representative pilot storage device 156, and a pilot signal generation unit 157.

The transmission control unit 151 determines whether to transmit data or a pilot signal.

In case of transmitting data,

The error correction encoding unit 153 performs an error correction encoding process on plain text data stored in the plain text data unit 152.

The transmission signal encryption unit 154 encrypts the plain text data on which the error correction encoding process has been performed using an encryption key stream generated by the key generation unit 140.

The data signal generation unit 155 converts the encrypted plain text data in a wireless signal form, generates a data signal using the converted data, and transmits the data signal via the antenna.

In case of transmitting a pilot signal,

The pilot signal generation unit 157 converts a pilot signal, stored in the representative pilot storage device 156, into a wireless signal form, and transmits the resulting signal via the antenna.

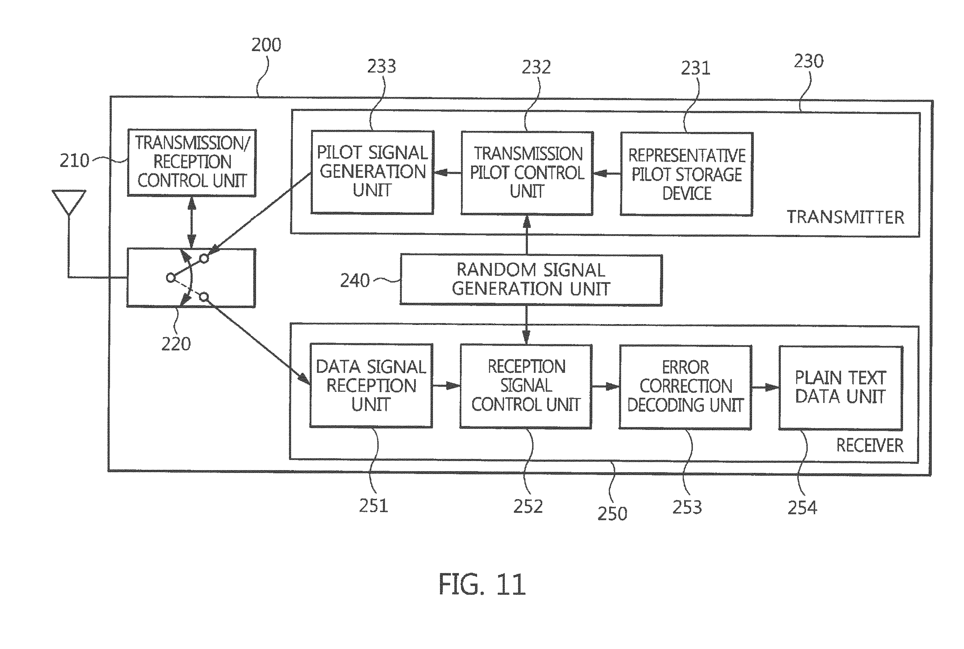

The data reception apparatus 200 placed in the network environment to which the method for transmitting sensitive data is applied is described in detail with reference to FIG. 11.

FIG. 11 is a diagram schematically illustrating the configuration of the data reception apparatus 200 according to an embodiment of the present invention.

Referring to FIG. 11, the data reception apparatus 200 may include a transmission/reception control unit 210, a switch 220, a transmitter 230, a random signal generation unit 240, and a receiver 250.

The data reception apparatus 200 is configured so that the switch 220 selects the transmitter 230 or the receiver 250 in response to an instruction from the transmission/reception control unit 210.

The transmitter 230 may include a representative pilot storage device 231, a transmission pilot control unit 232, and a pilot signal generation unit 233.

If necessary, the transmission pilot control unit 232 receives a random signal from the random signal generation unit 240 based on a pilot signal preset in the representative pilot storage device 231, and generates a pilot signal to be transmitted using the received random signal.

The pilot signal generation unit 233 converts the pilot signal, finally generated by the transmission pilot control unit 232, into a wireless signal form, and transmits the converted signal via an antenna.

The receiver 250 may include a data signal reception unit 251, a reception signal control unit 252, an error correction decoding unit 253, and a plain text data unit 254.

The data signal reception unit 251 receives a data signal via the antenna.

The reception signal control unit 252 controls a received data signal based on information generated by the random signal generation unit 240.

The error correction decoding unit 253 extracts plain text data from the plain text data unit 254 through an error correction encoding process.

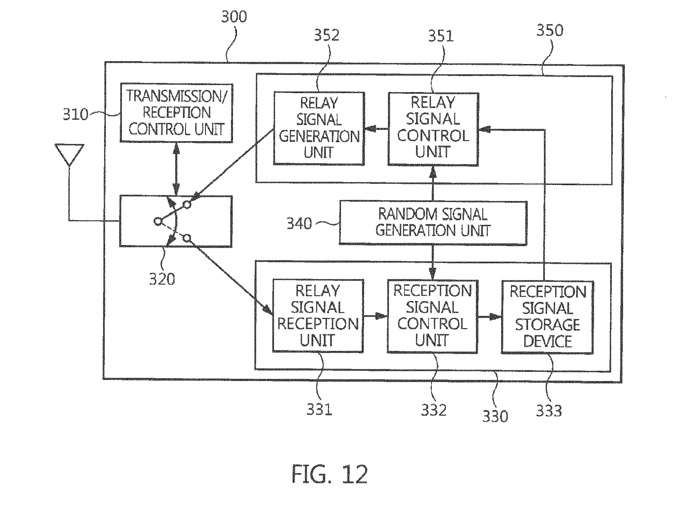

The relay 300 placed in the network environment to which the method for transmitting sensitive data is applied is described in detail below with reference to FIG. 12.

FIG. 12 a diagram schematically illustrating the configuration of the relay 300 according to an embodiment of the present invention.

Referring to FIG. 12, the relay 300 may include a transmission/reception control unit 310, a switch 320, a receiver 330, a random signal generation unit 340, and a transmitter 350.

The relay 300 is configured so that the switch 320 selects the receiver 330 or the transmitter 350 in response to an instruction from the transmission/reception control unit 310.

The receiver 330 may include a relay signal reception unit 331, a reception signal control unit 332, and a reception signal storage device 333.

The relay signal reception unit 331 receives a relay signal via an antenna.

The reception signal control unit 332 controls a relay signal using a random signal transmitted by the random signal generation unit 340, and stores the controlled relay signal in the reception signal storage device 333.

The transmitter 350 may include a relay signal control unit 351, and a relay signal generation unit 352.

The relay signal control unit 351 controls a relay signal, stored in the reception signal storage device 333, using a random signal transmitted by the random signal generation unit 340.

The relay signal generation unit 353 converts results, controlled by the relay signal control unit 351, into a wireless signal form and transmits the results of the conversion via the antenna.

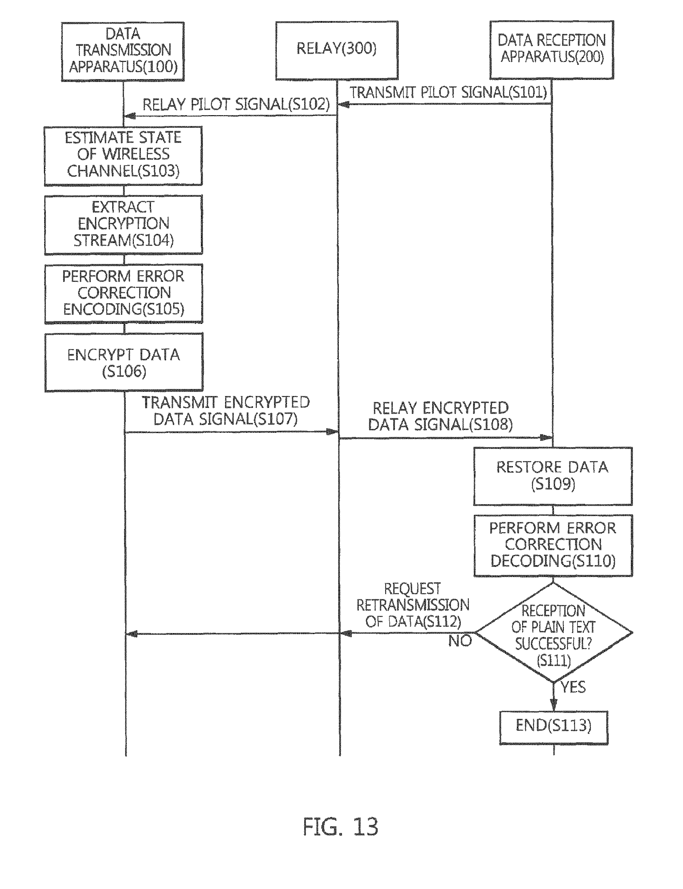

A method of encrypting data based on information about the state of a wireless channel and transmitting the encrypted data when sensitive data is transmitted using a trusted relay is described in detail below with reference to FIG. 13.

FIG. 13 is a flowchart illustrating the method of transmitting sensitive data using a trusted relay according to an embodiment of the present invention.

Referring to FIG. 13, the data reception apparatus 200 transmits its own pilot signal to the data transmission apparatus 100 and the trusted relay 300 in order to receive sensitive data at step S101. The data transmission apparatus 100 may not receive the pilot signal depending upon the situation. Accordingly, the trusted relay 300 relays and transmits the pilot signal, received from the data reception apparatus 200, to the data transmission apparatus 100 at step S102.

The data transmission apparatus 100 estimates the state of a wireless channel between the data transmission apparatus 100 and the trusted relay 300 using the received pilot signal at step S103. Furthermore, the data transmission apparatus 100 may estimate the state of a wireless channel between the data transmission apparatus 100 and the data reception apparatus 200.

At step S104, the data transmission apparatus 100 extracts an encryption key stream from information including the state of the wireless channel (hereinafter also referred to as "wireless channel state information") estimated at step S103.

The data transmission apparatus 100 may extract the encryption key stream from the results of the estimation of the state of the wireless channel between the data transmission apparatus 100 and the data reception apparatus 200.

The data transmission apparatus 100 performs an error correction encoding process on plain text data to be transmitted at step S105.

The data transmission apparatus 100 encrypts the plain text data on which the error correction encoding process has been performed using the encryption key stream at step S106.

The data transmission apparatus 100 transmits the encrypted data signal to the trusted relay 300 at step S107, and the trusted relay 300 relays and transmits the encrypted data signal to the data reception apparatus 200 at step S108.

The data reception apparatus 200 restores the encrypted data signal at step S109, and restores the plain text data by performing an error correction decoding process on the restored data signal at step S110. Alternatively, the data reception apparatus 200 may extract data from a signal directly transmitted by the data transmission apparatus 100, and may restore plain text data by performing an error correction decoding process on the extracted data.

The data reception apparatus 200 determines whether or not the reception of the plain text data restored at step S110 is successful at step S111.

If, as a result of the determination at step S111, it is determined that the reception of the restored plain text data is not successful, the data reception apparatus 200 requests the data transmission apparatus 100 or the trusted relay 300 to transmit encrypted data at step S112.

If, as a result of the determination at step S111, it is determined that the reception of the restored plain text data is successful, the data reception apparatus 200 terminates its operation at step S 113.

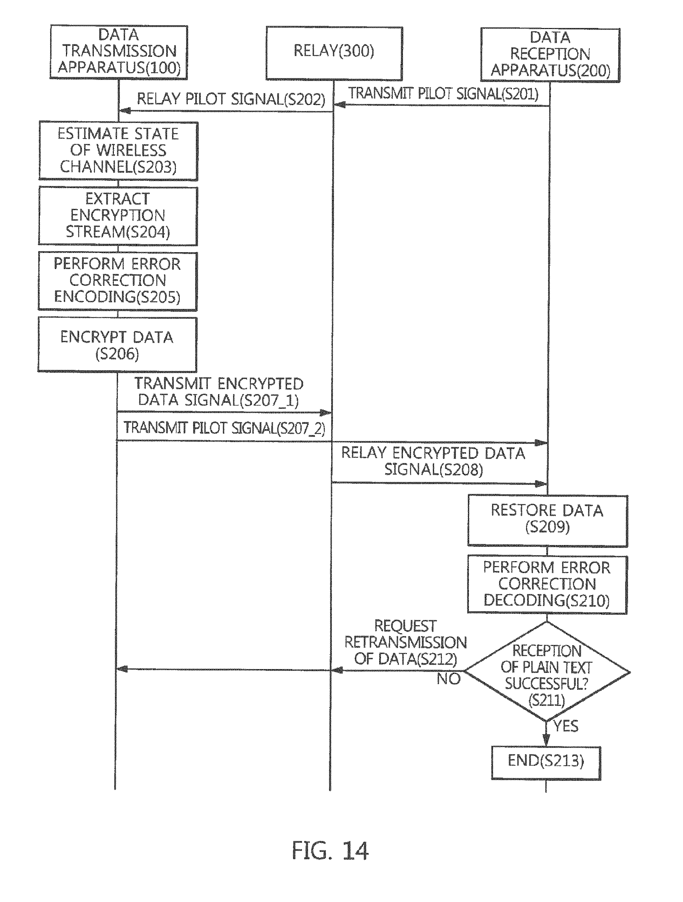

A method of encrypting data based on wireless channel state information and transmitting the encrypted data when sensitive data is transmitted using an untrusted relay is described in detail below with reference to FIG. 14.

FIG. 14 is a flowchart illustrating a method of transmitting sensitive data using an untrusted relay according to an embodiment of the present invention.

Referring to FIG. 14, the data reception apparatus 200 transmits its own pilot signal to the data transmission apparatus 100 and the untrusted relay 300 in order to receive sensitive data at step S201.

The untrusted relay 300 relays and transmits the pilot signal, received from the data reception apparatus 200, to the data transmission apparatus 100 at step S202.

That is, the data transmission apparatus 100 receives both the pilot signal of the data reception apparatus 200 relayed and transmitted by the untrusted relay 300, and the pilot signal directly transmitted by the data reception apparatus 200.

The data transmission apparatus 100 estimates the state of a wireless channel between the data transmission apparatus 100 and the untrusted relay 300 using the received pilot signal at step S203.

At step S204, the data transmission apparatus 100 extracts an encryption key stream from information including the state of the wireless channel (hereinafter also referred to as "wireless channel state information") estimated at step S203. Furthermore, as illustrated at step S203 and step S204, the data transmission apparatus 100 extracts an encryption key stream from the results of the estimation of the state of a wireless channel between the data transmission apparatus 100 and the data reception apparatus 200.

The data transmission apparatus 100 performs an error correction encoding process on plain text data to be transmitted at step S205.

The data transmission apparatus 100 encrypts the plain text data on which the error correction encoding process has been performed using the encryption key stream at step S206.

The data transmission apparatus 100 transmits the encrypted data signal to the untrusted relay 300 at step S207_1, and the untrusted relay 300 relays and transmits the encrypted data signal to the data reception apparatus 200 at step S208. Furthermore, the data transmission apparatus 100 transmits a pilot signal to the data reception apparatus 200 at step S207_2.

The data reception apparatus 200 estimates the state of a wireless channel between the data transmission apparatus 100 and the untrusted relay 300 based on the pilot signal received from the data transmission apparatus 100, and extracts an encryption key stream from the results of the estimation.

Furthermore, the data reception apparatus 200 restores data using the encrypted data signal received from the untrusted relay 300 and the encryption key stream extracted based on the pilot signal received from the data transmission apparatus 100 at step S209.

The data reception apparatus 200 restores plain text data by performing an error correction decoding process on the restored data at step S210.

Alternatively, the data reception apparatus 200 may extract data from a signal directly transmitted by the data transmission apparatus 100, and may restore plain text data by performing an error correction decoding process on the extracted data.

The data reception apparatus 200 determines whether or not the reception of the restored plain text data is successful at step S211.

If, as a result of the determination at step S211, it is determined that the reception of the restored plain text data is not successful, the data reception apparatus 200 requests the data transmission apparatus 100 or the trusted relay 300 to transmit an encrypted data signal at step S212.

If, as a result of the determination at step S211, it is determined that the reception of the restored plain text data is successful, the data reception apparatus 200 terminates its operation at step S213.

As described above, in accordance with an embodiment of the present invention, in the wireless relay system, the data transmission apparatus 100 encrypts plain text data based on wireless channel state information and transmits the encrypted data, and the data reception apparatus 200 receives plain text data that has been naturally decoded.

The method of transmitting data according to an embodiment of the present invention may be basically divided into a process of generating an encryption key stream and a physical layer encryption process.

More specifically, the data reception apparatus 200, that is, an apparatus that will receive data, transmits a pilot signal to the data transmission apparatus 100 and the relay 300. The data transmission apparatus 100 and the relay 300 estimate h_{AB} and h_{RB}, that is, wireless channel state information, based on the pilot signal received from the data reception apparatus 200, and extracts encryption key streams using the estimated h_{AB} and h_{RB}. Such a process is also applied to the case where the relay 300 transmits a pilot signal to the data transmission apparatus 100. Wireless channel state information used to extract an encryption key stream may include information about the phase shift, intensity, threshold crossing rate, and polarization of a received pilot signal.

For example, in a wireless network environment, such as that of FIG. 1, the data transmission apparatus 100 transmits encrypted data to the data reception apparatus 200 using the relay 300. In this case, the relay 300 may follow a process of transmitting the sensitive data, as illustrated in FIG. 13 or 14, depending upon the trust.

A process of extracting an encryption key stream using information about the phase of a wireless channel that belongs to wireless channel state information is described in detail below.

In the data transmission apparatus 100, if information about the phase of state "h" of a wireless channel received from the data reception apparatus 200 is θₕ, -θₕ is the encryption key stream of a corresponding symbol that is transmitted over the wireless channel. The encryption key stream of the corresponding symbol extracted from the wireless channel state information is used for the symbol-based encryption of a physical layer.

If the data reception apparatus 200 receives encrypted data from the data transmission apparatus 100 and a wireless channel between the data transmission apparatus 100 and the data reception apparatus 200 maintains the same state, the encrypted data is received in the form of plain text data. In this case, state "g" of a wireless channel that is experienced by the eavesdropping apparatus 400 trying to eavesdrop on the transmission of encrypted and transmitted data is independent of state "h" of the wireless channel between the data transmission apparatus 100 and the data reception apparatus 200. Accordingly, the eavesdropping apparatus 400 is unable to extract an encryption key stream, and also is unable to restore plain text data.

A process of performing the symbol-based encryption of a physical layer and then performing transmission using the trusted relay 300 is described below.

When the data reception apparatus 200 transmits its own pilot signal in order to receive data, the trusted relay 300 and the data transmission apparatus 100 receive the pilot signal. The data transmission apparatus 100 may not receive the pilot signal depending upon the situation. In this case, the pilot signal of the data reception apparatus 200 is assumed to have a phase value of 0 for ease of description. In this case, the trusted relay 300 relays and transmits the pilot signal, received from the data reception apparatus 200, to the data transmission apparatus 100, as illustrated at step S102 of FIG. 13. In this case, the phase value of the pilot signal received by the trusted relay 300 is θ_{BR}. The data transmission apparatus 100 receives the pilot signal relayed and transmitted by the trusted relay 300, and the phase value of the relayed and transmitted pilot signal is θ_{BR}+θ_{AR}. The data transmission apparatus 100 generates a symbol-based encryption key stream -θ_{BR}-θ_{R} based on the phase value θ_{BR}+θ_{AR} of the relayed and transmitted pilot signal. The data transmission apparatus 100 may receive the pilot signal directly transmitted by the data reception apparatus 200 depending upon the situation. In this case, the phase value of the pilot signal received by the data transmission apparatus 100 is θ_{AB}. The data transmission apparatus 100 generates a symbol-based encryption key stream of - θ_{AB} based on the phase value θ_{AB} of the pilot signal.

Plain text data to be transmitted by the data transmission apparatus 100 undergoes error correction encoding on a frame basis, and thus has a binary bit form. Thereafter, the binary bits undergo symbol modulation, and thus generate an analog symbol. In this case, encryption is performed in the physical layer using the extracted symbol-encryption key stream.

A process of encrypting a single symbol in the physical layer using an encryption key stream obtained based on information about the phase of a wireless channel as described above is described below.

Assuming that the phase of a symbol to be transmitted by the data transmission apparatus 100 is θ, the data transmission apparatus 100 transmits a data signal that has been encrypted to have a phase of θ-θ_{BR}-θ_{AR}. The trusted relay 300 receives the encrypted data signal in the form of a symbol having a phase value of θ-θ_{BR} over a wireless channel. The trusted relay 300 relays and transmits the received symbol to the data reception apparatus 200. In this case, the phase value of the relayed symbol is θ-θ_{BR}. Thereafter, the data reception apparatus 200 receives the signal from the trusted relay 300 in the form of a symbol having a phase value of θ over a wireless channel. If the data transmission apparatus 100 directly transmits the encrypted data signal to the data reception apparatus 200, the symbol is encrypted to have a phase of θ-θ_{AB}, and experiences the wireless channel. Accordingly, the encrypted symbol transmitted to the data reception apparatus 200 is naturally decoded, thereby having a phase value of θ. After receiving decoded symbols, the data reception apparatus 200 combines the received symbols and restores plain text data by performing an error correction decoding process on the combined symbols. In a real environment, some errors may occur in a received signal due to factors, such as the shift and thermal noise of a wireless channel. In this case, erroneously restored data bits may be restored through error correction decoding. Finally, the data reception apparatus 200 determines whether or not the reception of the plain text data is successful, and requests the data transmission apparatus 100 or the trusted relay 300 to transmit data again if, as a result of the determination, it is determined that the reception of the plain text data is not successful. In FIGS. 2 to 5, a solid line indicates essential transmission, and a dotted line indicates optional transmission.

The symbol transmitted from the data transmission apparatus 100 to the trusted relay 300 has a phase value of θ-θ_{BR}. In contrast, since the pilot signal transmitted from the data reception apparatus 200 to the trusted relay 300 has a phase value of θ_{BR}, the trusted relay 300 may restore the original symbol from a relayed symbol. In this case, the relay needs to be the trusted relay 300.

A process of performing the symbol-based encryption of the physical layer and then perform transmission using the untrusted relay 300 is described below.

When the data reception apparatus 200 transmits its own pilot signal in order to receive data, the untrusted relay 300 and the data transmission apparatus 100 receive the pilot signal. In this case, the pilot signal of the data reception apparatus 200 is assumed to have a phase value of 0 for ease of description. The untrusted relay 300 relays and transmits the pilot signal, received from the data reception apparatus 200, to the data transmission apparatus 100. In this case, the pilot signal received by the untrusted relay 300 has a phase value of θ_{BR}. The data transmission apparatus 100 receives the pilot signal relayed and transmitted by the untrusted relay 300, and the relayed and transmitted pilot signal has a phase value of θ_{BR}+θ_{AR}. The data transmission apparatus 100 generates a symbol-based encryption key stream of -θ_{BR}-θ_{AR} based on the phase value θ_{BR}+θ_{AR} of the relayed and transmitted pilot signal. The pilot signal received by the data transmission apparatus 100 has a phase value of θ_{AB}. The data transmission apparatus 100 generates a symbol-based encryption key stream of - θ_{AB} based on the phase value θ_{AB} of the received pilot signal.

Plain text data to be transmitted by the data transmission apparatus 100 undergoes error correction encoding on a frame basis and thus has a binary bit form. Thereafter, the binary bits are converted into an analog symbol to be transmitted through symbol modulation. In this case, encryption is performed on the extracted symbol-based encryption key stream in the physical layer.

A process of encrypt a single symbol in the physical layer using the encryption key stream obtained based on information about the phase of a wireless channel, as described above, is described below.

Assuming that the phase of a symbol to be transmitted by the data transmission apparatus 100 is θ, the data transmission apparatus 100 transmits a data signal encrypted to have a phase of θ-θ_{BR}-θ_{AR}-θ_{AB}. The untrusted relay 300 receives the encrypted data signal in the form of a symbol having a phase value of θ-θ_{BR}-θ_{AB} over a wireless channel. The untrusted relay 300 relays and transmits the received symbol to the data reception apparatus 200. In this case, the relayed symbol has a phase value of θ-θ_{BR}-θ_{AB}. Thereafter, the signal transmitted by the untrusted relay 300 is received by the data reception apparatus 200 in the form of a symbol having a phase value of θ-θ_{AB} over a wireless channel. If the untrusted relay 300 is used, the data transmission apparatus 100 specially and additionally transmits a pilot signal to the data reception apparatus 200. In this case, the pilot signal is assumed to have a phase value of 0. The data reception apparatus 200 obtains θ_{AB}, that is, information about the phase of the state of the wireless channel, from the pilot signal received from the data transmission apparatus 100. Thereafter, the data reception apparatus 200 restores plain text symbol having a phase value of θ using the phase value θ_{AB} obtained from the symbol that has been received from the untrusted relay 300 and that has the phase value of θ-θ_{AB}. Alternatively, if the data transmission apparatus 100 directly transmits the encrypted data signal to the data reception apparatus 200, the symbol is encrypted to have a phase of θ-θ_{AB}, and experiences the wireless channel. Accordingly, the encrypted symbol transmitted to the data reception apparatus 200 is naturally decoded, and thus has a phase value of θ. After receiving decoded symbols, the data reception apparatus 200 combines the decoded symbols and restores plain text data by performing error correction decoding on the combined symbols. In a real environment, some errors may occur in a received signal due to factors, such as the shift and heat noise of a wireless channel. In such a case, erroneously restored data bits may be restored through error correction decoding. Finally, the data reception apparatus 200 determines whether or not the reception of the plain text data is successful, and requests the data transmission apparatus 100 or the trusted relay 300 to transmit data again if, as a result of the determination, it is determined that the reception of the plain text data is not successful. In FIGS. 6 to 9, a solid line indicates essential transmission, and a dotted line indicates optional transmission.

In general, if an antenna is sufficiently far away, a wireless channel is independently formed. Accordingly, the state of the wireless channel h_{AR} between the data transmission apparatus 100 and the relay 300, the state of the wireless channel h_{BR} between the data reception apparatus 200 and the relay 300, the state of the wireless channel h_{AB} between the data transmission apparatus 100 and the data reception apparatus 200, the state of the wireless channel g_{AE} between the data transmission apparatus 100 and the eavesdropping apparatus 400, and the state of the wireless channel g_{BE} between the data reception apparatus 200 and the eavesdropping apparatus 400 have no mode correlation.

Accordingly, if encryption is performed based on wireless channel state information and data is transmitted, the eavesdropping apparatus 400 is unable to eavesdrop on the transmission of data because it is unaware of the states of other wireless channels.

For example, it is assumed that information about the phase of the wireless channel between the data transmission apparatus 100 and the relay 300 is θ_{AR} and information about the phase of the wireless channel between the data transmission apparatus 100 and the eavesdropping apparatus 400 is θ_{AE}. If the data transmission apparatus 100 performs encryption in the physical layer based on the phase information, the data transmission apparatus 100 transmits θ, corresponding to a plain text symbol, to the relay 300 in the form of an encrypted symbol having a phase of θ-θ_{AR}. In this case, the eavesdropping apparatus 400 receives an encrypted symbol having a phase of θ-θ_{AR}+θ_{AE} via the wireless channel. In general, the phase information is uniformly distributed over the wireless channel. This makes it difficult for the eavesdropping apparatus 400 to analogize θ corresponding to the plain text symbol that is transmitted by the data transmission apparatus 100. Although the relay 300 relays a signal received from the data transmission apparatus 100 or the data transmission apparatus 100 directly transmits an encrypted symbol to the data reception apparatus 200 in the physical layer, it is difficult for the eavesdropping apparatus 400 to analogize θ, corresponding to a plain text symbol, from the encrypted and transmitted symbol.

If a change in a wireless channel is slight, the eavesdropping apparatus 400 may compare the phase differences between successive symbols transmitted by the data transmission apparatus 100 or the relay 300, and may analogize a plain text symbol from the encrypted and transmitted symbol. In order to prevent such analogy, in an embodiment of the present invention, a random phase value is applied to a pilot signal. If a change in information about the phase of a wireless channel is slight, the data reception apparatus 200 or the relay 300 applies a random phase value to a pilot signal on a symbol basis. The data reception apparatus 200 or the relay 300 generates random phase information θᵣ for each pilot symbol, shifts the phase of the pilot symbol by θᵣ, and transmits the shifted pilot symbol. Different random phase information that is newly generated may be applied to pilot symbols that are transmitted each time.

For example, if the value of the pilot symbol of the relay 300 is 0 and phase information for a wireless channel response between the data transmission apparatus 100 and the relay 300 is θ_{AR}, the pilot symbol of the relay 300 is transmitted in the form of a symbol in which a random phase, that is, θᵣ, has been added to the original pilot symbol. In this case, the data transmission apparatus 100 does not need to be aware of the random phase information used by the relay 300. When the relay 300 completes transmission, the data transmission apparatus 100 considers θ_{AR}+θᵣ to be phase information for a wireless channel response to the pilot symbol, and performs encryption in the physical layer based on the phase information. If the data transmission apparatus 100 performs encryption on θ corresponding to a single plain text symbol using an encryption key stream of -θ_{AR}-θᵣ obtained from the wireless channel between the data transmission apparatus 100 and the relay 300 and transmits the encrypted symbol, the encrypted symbol experiences the wireless channel having phase information θ_{AR}, and the relay 300 receives the symbol having phase information θ-θᵣ. Thereafter, since the relay 300 is aware of the random phase value θᵣ that has been self-generated, it adds the random phase value θᵣ to the symbol received from the data transmission apparatus 100, and obtains θ corresponding to the plain text symbol. Accordingly, the eavesdropping apparatus 400 is unable to extract the plain text symbol from the encrypted symbol because it receives a phase value of θ-θ_{AR}-θᵣ+θ_{AE}. As a result, if random information is applied, encrypted communication can be performed while randomness is maintained even when a change in a wireless channel is slight. An artificial change in information about a wireless channel using a random phase value is applied to the case where pilot symbols are transmitted between the relay 300 and the data transmission apparatus 100 and between the data reception apparatus 200 and the data transmission apparatus 100 in the same manner.

In accordance with an embodiment of the present invention, in the relay and the method for transmitting sensitive data using the relay, in a wireless communication system to which the relay has been applied, plain text data can be encrypted and transmitted in the form of an encryption key stream in the physical layer that has been generated based on information about the state of a wireless channel. Furthermore, in the present invention, data that has been encrypted and transmitted by the data transmission apparatus or the relay in the physical layer can be naturally decoded in response to a wireless channel response, and can be received by a recipient in the form of plain text data. Accordingly, an eavesdropper cannot analogize plain text data from received encrypted data, having no correlation with the plain text data, using an eavesdropping apparatus because it experiences a wireless channel response independent of the users.

Furthermore, the method of generating and transmitting an encryption key stream according to an embodiment of the present invention is advantageous in that the use of computation resources, power consumption, the capacity of memory, and costs can be reduced and a separate encryption chip does not need to be used because a separate mathematical encryption algorithm does not need to be used and the data reception apparatus can receive naturally decoded data.

Furthermore, in accordance with an embodiment of the present invention, the randomness of encryption communication can be maintained because the effect that a wireless channel is artificially changed can be achieved by adding random information even when a change in the wireless channel is slight.

The exemplary embodiments have been disclosed in the drawings and specification. Specific terms have been used herein, but the terms are used merely to describe the present invention, but are not used to limit the meaning of the terms or the scope of the present invention written in the claim. Accordingly, those skilled in the art will understand that various modifications and other equivalent embodiments are possible from the present invention. Accordingly, the true technical scope of the present invention should be determined by the following claims.

## Claims

1. A method of transmitting sensitive data, comprising:
receiving, by a data transmission apparatus, a pilot signal that is transferred by a data reception apparatus and relayed by a relay;
estimating a state of a wireless channel between the data transmission apparatus and the relay using the pilot signal;
extracting an encryption key stream from information including the state of the wireless channel;
performing an error correction encoding process on plain text data to be transmitted and performing encryption on the plain text data using the encryption key stream; and
relaying and transmitting the encrypted plain text data to the data reception apparatus using the relay.

2. The method of claim 1, wherein the information including the state of the wireless channel comprises information about at least one of a phase shift, intensity, threshold crossing rate and polarization of the pilot signal.

3. The method of claim 1 or 2, wherein the relay corresponds to a trusted relay.

4. The method of one of claims 1 to 3, further comprising, before receiving the pilot signal transferred by the data reception apparatus and relayed by the relay, receiving, by the data transmission apparatus, a pilot signal from the relay or the data reception apparatus.

5. The method of one of claims 1 to 4, wherein relaying and transmitting the encrypted plain text data to the data reception apparatus comprises directly transmitting, by the data transmission apparatus, the encrypted plain text data to the data reception apparatus.

6. An apparatus for transmitting sensitive data, comprising:
a receiver configured to receive a pilot signal via an antenna, and to estimate a state of a wireless channel using the received pilot signal;
a key generation unit configured to generate an encryption key stream based on information including the state of the wireless channel; and
a transmitter configured to transmit plain text data using the encryption key stream, or to transmit a pilot signal.

7. The apparatus of claim 6, wherein the transmitter comprises a transmission control unit configured to determine whether to transmit the plain text data or the pilot signal.

8. The apparatus of claim 7, wherein the transmitter comprises:
an error correction encoding unit configured to perform an error correction encoding process on the plain text data if the transmission control unit determines to transmit the plain text data;
a transmission signal encryption unit configured to encrypt the plain text data on which the error correction encoding process has been performed using the encryption key stream; and
a data signal generation unit configured to convert the encrypted plain text data into a wireless signal form, to generate a data signal, and to transmit the data signal to a data reception apparatus.

9. The apparatus of claim 7 or 8, wherein the transmitter comprises a pilot signal generation unit configured to convert the pilot signal, stored in a representative pilot storage device, into a wireless signal form, and to transmit the converted signal to a data reception apparatus if the transmission control unit determines to transmit the pilot signal.

10. The apparatus of one of claims 6 to 9, wherein the information including the state of the wireless channel comprises information about at least one of a phase shift, intensity, threshold crossing rate, and polarization of the pilot signal.
